# EUROPÄISCHE PATENTANMELDUNG

(11) **EP 1 943 923 A2**
(43) Veröffentlichungstag der Anmeldung: **16.07.2008**
(21) Anmeldenummer: 08000093.8
(22) Anmeldetag: 04.01.2008
(51) Int. Cl.: A47B 47/05, F16B 12/46

(54) **Möbelelement und Möbel**

(30) Priorität: 09.01.2007 DE 102007002064
(71) Anmelder: Reddehase, Axel, 60439 Frankfurt am Main (DE); Thust, Carmen, 65719 Hofheim (DE); Lellek, Gregor, 65719 Hofheim (DE); Sturm, Petra, 60439 Frankurt am Main (DE)
(72) Erfinder: Reddehase, Axel, 60439 Frankfurt am Main (DE); Thust, Carmen, 65719 Hofheim (DE); Lellek, Gregor, 65719 Hofheim (DE); Sturm, Petra, 60439 Frankurt am Main (DE)
(74) Vertreter: KEIL & SCHAAFHAUSEN Patentanwälte

(57) **Zusammenfassung**

Die Erfindung beinhaltet ein Möbelelement mit einer Vielzahl von im Wesentlichen stangenförmigen Rahmenelementen (1, 20). Die Rahmenelemente weisen die Form entweder eines ersten Rahmenelementtyps (1) oder eines zweiten Rahmenelementtyps (20) oder ggf. eines weiteren Rahmenelementtyps auf, wobei der erste Rahmenelementtyp an seinem ersten Ende und seinem zweiten Ende je einen stufenartig ausgeklinkten Überlappungsabschnitt (5, 6) aufweisen. Die Rahmenelemente (1) des ersten Rahmenelementtyps sind miteinander und die Rahmenelemente des ersten Rahmenelementtyps (1) und des zweiten Rahmenelementtyps (20) sind miteinander verbunden, wobei eine Verbindung zweier Rahmenelemente des ersten Rahmenelementtyps am zweiten Ende des ersten Rahmenelements und am ersten Ende des zweiten Rahmenelements mittels einer Überlappung der jeweiligen ausgeklinkten Überlappungsabschnitte (5, 6) erfolgt. Die Erfindung betrifft außerdem ein Möbel bestehend aus einem oder mehreren miteinander verbundenen Möbelelementen.

## Beschreibung

Die vorliegende Anmeldung betrifft ein Möbelelement mit einer Vielzahl von im Wesentlichen stangenförmigen Rahmenelementen und ein Möbel, das aus einem Möbelelement oder mehreren Möbelelementen zusammengesetzt ist.

Es ist bereits bekannt, Möbelelemente, die unterschiedliche Formen aufweisen, zur Herstellung von Möbeln, wie Schränken, Kommoden, Regalen oder dergleichen zu verwenden. Aus beispielsweise quader- oder würfelförmigen Möbelelementen lassen sich neue, dreidimensionale Wohnstrukturen errichten, wobei zu jedem Zeitpunkt eine individuelle Veränderung bzw. Erweiterung des Gesamtsystems und einzelner Möbelelemente wünschenswert ist.

In der DE 23 38 493 A1 ist ein Möbelelement in Quaderform dargestellt, welches eine horizontale und eine vertikale Gebrauchslage aufweist. Das Möbelelement setzt sich zusammen aus vier parallel verlaufende Gehäusekanten aus Profilrohren, die Aufnahmetaschen zum Einsetzen von Wänden aufweisen. Die Stirnenden der Profilrohre sind jeweils mit einem rahmen- oder plattenförmigen Trägerteil verbunden. Durch diese Trägerteile erhält das Möbelelement seine Stabilität.

Eine Schrankkombination aus nebeneinander und übereinander gesetzten, vollständigen Teilschränken ist in der DE 22 57 010 offenbart. Die Teilschränke bestehen aus mit einer Öffnung versehenen Hohlzylindern gleichen Durchmessers. Die Hohlzylinder der Teilschränke sind jeweils mit einer von oben bis unten am Teilschrank verlaufenden, durchgehenden Einbuchtung versehen, die einen zylinderförmigen Verlauf aufweist und in die sich der Nachbar-Teilschrank passend einfügt. Ferner weisen die Teilschränke durchgehende Bohrungen in Grund- und Deckplatte auf, welche zum Hindurchführen eines senkrechten Standrohres durch übereinander angeordnete Teilschränke bestimmt sind.

Aus der DE 299 04 810 U1 ist ein Möbelelementsystem bekannt, das aus Elementen besteht, welche an ihren Flächen zusammen gefügt sind. Die Elemente sind quaderförmig gestaltet wobei die verwendeten Elemente einzeln bereits als Möbelstücke dienen können.

Auch in der DE 297 23 814 U1 ist ein aus quaderförmigen Möbelelementen gebildetes Möbel beschrieben. Die quaderförmigen Möbelelemente weisen jeweils an ihrer Ober-, ihrer Unterseite und mindestens zwei weiteren Seiten Wände mit Durchbrüchen auf. Mittels durch die Durchbrüche greifende Verbindungselemente sind die Möbelelemente miteinander verbunden. Jedes Möbelelement ist als solches selbsttragend.

Weiter ist aus der DE 17 78 751 A ein aus Abschnitten bestehender Schrank bekannt, der eine Vielzahl gleichartiger, sich selbst verriegelnder Abteile aufweist. Jedes Abteil besitzt ein Paar Seitenwände, eine Endwand, einen Deckel und einen Boden. An der Unterseite des Deckels und an der Oberseite des Bodens sind jeweils ein Einschnitt ausgebildet. Diese Einschnitte benachbarter Abteile greifen ineinander ein und verhindern das Trennen der Abteile entlang der Achse der zusammen gebauten Abteile.

In der DE 100 36 145 A1 ist ein quaderförmiges Möbelelement erläutert, welches sich aus zwölf Vierkanthölzern zusammensetzt. Die Vierkanthölzer bilden die Rahmenelemente eines zusammengesetzten Rahmens, welcher durch Wandelemente verschließbar ist.

Als nachteilig bei oben angegebenen Möbelelementen erweist sich, dass sie entweder keine dreidimensionale Gebrauchslage, das heißt keine beliebige Lage im Raum, ermöglichen oder nicht fest miteinander verbindbar sind. Die bekannten Elementsysteme sind größtenteils nur für den Einsatz von Elementen mit stets gleicher Kantenlänge bestimmt. Ein Nachteil der bekannten Möbelelemente besteht auch darin, dass die Seitenteile gar nicht oder nur eingeschränkt austauschbar sind. Außerdem sind die Verbindungssysteme oder Teile der Verbindungssysteme für die Möbelelemente von außen sichtbar, so dass die Optik beeinträchtigt wird und abhängig von der Art der verwendeten Verbindungsmittel die Erweiterbarkeit der Gesamtstruktur eingeschränkt ist.

Es ist daher eine Aufgabe der vorliegenden Erfindung, ein flexibel einsetzbares Möbelelement zur Herstellung von Möbeln zu schaffen, welches eine größere Konstruktions- und Gestaltungsvielfalt als die bekannten Systeme aufweist und welche sich rasch und einfach auf-, um- und/oder abbauen lässt.

Diese Aufgabe wird erfindungsgemäß im Wesentlichen durch ein Möbelelement mit einem insbesondere quaderförmigen Rahmen aus z.B. stangenförmigen Rahmenelementen und mit wenigstens einem Verkleidungs- und/oder Funktionselement gelöst, welches mit dem Rahmen verbindbar ist. Ein Funktionselement kann erfindungsgemäß auch ein Verbindungselement sein. Dabei weisen die Rahmenelemente des Rahmens in einem definierten Raster jeweils wenigstens eine erste und wenigstens eine zweite Öffnung auf, wobei jeweils eine erste und eine zweite Öffnung einander derart zugeordnet sind, dass sie in Längsrichtung des jeweiligen Rahmenelements positionsgleich angeordnet aber zueinander in einem vorgegebenen Winkel, bspw. rechtwinklig, ausgerichtet sind. Weiter ist zur lösbaren Befestigung eines Verkleidungs- und/oder Funktionselements entweder wenigstens ein Verbindungselement in zwei einander zugewandten Öffnungen oder wenigstens zwei Verbindungselemente in zwei einander zugewandten Öffnungen festgelegt, welche in zwei einander gegenüberliegenden Rahmenelementen angeordnet sind. Die Öffnungen in den Rahmenelementen ermöglichen es, beliebige verschiedene Elemente, wie Wandelemente, Türen, Schubladen, Auflagen oder dgl. insbesondere lösbar an dem durch die Rahmenelemente gebildeten Möbelelement zu befestigen. Das Möbelelement lässt sich somit nicht nur rasch und mit einfachen Mitteln mit weiteren Möbelelementen zu einem Möbel verbinden, sondern auch in seinem Aufbau und/oder Erscheinungsbild unterschiedlichen Funktionen oder Einsatzbedingungen anpassen. Die Verkleidungs- und/oder Funktionselemente wie Wandelemente, Auflagen oder dergl. können außerdem, ohne den Rahmen ganz oder teilweise abzubauen oder auseinanderzunehmen, entfernt oder ausgetauscht werden.

In Weiterbildung des Erfindungsgedankens ist es vorgesehen, dass das Möbelelement Verkleidungs- und/oder Funktionselemente aufweist, die zumindest für einzelne Wandflächen einen doppelwandigen Aufbau ermöglichen. Hierzu ist vorzugsweise ein mit dem Rahmen verbindbares Verkleidungs- und/oder Funktionselement als eine vorzugsweise von dem Rahmen lösbare Innenwand ausgebildet, die zusätzliche Befestigungselemente zum vorzugsweise lösbaren Fixieren von wenigstens einem Außenwandelement aufweist, welches ebenfalls ein Verkleidungs- und/oder Funktionselement bildet. Derartige Befestigungselemente können bspw. einen Magnet und/oder einen Schnapp- oder Klick-Verschluss aufweisen.

Hierdurch ist es möglich, bei einem Möbelelement die sichtbare Außenfläche rasch und mit einfachen Mitteln auszuwechseln. Dies kann nicht nur dann wünschenswert sein, wenn die Außenfläche durch Verschleiß und/oder Verschmutzung unansehnlich geworden ist, sondern auch zur Anpassung des Möbelelements an eine neue Raumgestaltung dienen. So lässt sich bspw. ein mit Kinderzimmermotiven versehenes Möbelelement mit minimalem Aufwand durch Austausch der Außenflächen in ein Möbelelement umwandeln, das zum Einsatz in einem Büro geeignet ist.

Die Öffnungen sind vorzugsweise jeweils als Sacklochbohrungen ausgebildet, in welchen bspw. Gewindemuffen zum Anschluss eines Verbindungselements aufgenommen sind.

Wenn die Rahmenelemente derart in dem Rahmen angeordnet sind, dass jeweils zwei zumindest im Wesentlichen baugleiche Rahmenelemente parallel zueinander verlaufend einander gegenüberliegen, wobei diese Rahmenelemente zueinander um 180° um eine Achse senkrecht zu der Längsachse der Rahmenelemente gedreht sind, kann das Möbelelement aus wenigen verschiedenen Rahmenelementen aufgebaut werden. Dies wird nicht nur in Bezug auf die Herstellungs- und Lagerhaltungskosten bevorzugt, sondern erweitert auch die Einsatzmöglichkeiten der Rahmenelemente aufgrund ihrer Austauschbarkeit.

Nach einer bevorzugten Ausführungsform ist das Raster der Öffnungen derart gewählt, dass Öffnung in zwei zumindest im Wesentlichen baugleichen und parallel zueinander verlaufend einander gegenüberliegen Rahmenelementen zum Anschluss wenigstens eines Verbindungselements miteinander fluchten.

Die der Erfindung zugrunde liegende Aufgabe wird unabhängig davon durch ein Möbelelement gelöst, bei dem die Rahmenelemente die Form entweder eines ersten Rahmenelementtyps oder eines zweiten Rahmenelementtyps oder ggf. eines weiteren Rahmenelementtyps aufweisen, wobei der erste Rahmenelementtyp an seinem ersten Ende und seinem zweiten Ende je einen insbesondere stufenartig ausgeklinkten Überlappungsabschnitt aufweisen, wobei in Ecken des Möbelelements jeweils zwei Rahmenelemente des ersten Rahmenelementtyps miteinander und ggf. mit einem Rahmenelement des zweiten Rahmenelementtyps verbunden sind, und wobei die Verbindung der Rahmenelemente des ersten Rahmenelementtyps derart erfolgt, dass sich der ausgeklinkte Überlappungsabschnitt des ersten Endes eines der Rahmenelemente des ersten Rahmenelementtyps mit dem ausgeklinkten Überlappungsabschnitt des zweiten Endes des anderen Rahmenelements des ersten Rahmenelementtyps überlappen. Das erfindungsgemäße Möbelelement kann somit aus bspw. nur zwei verschiedenen Rahmenelementen aufgebaut werden, wobei diese durch die Überlappungsabschnitte besonders einfach und gleichzeitig sicher und stabil miteinander verbindbar sind.

Die Aufgabe wird außerdem durch ein Möbel gelöst, das aus einem oder mehreren miteinander verbundenen Möbelelement(en) der oben genannten Art besteht.

Der Vorteil des erfindungsgemäßen Möbelelements bzw. des erfindungsgemäßen Möbels besteht darin, dass das erfindungsgemäße Möbelelement eine große Konstruktions- und Gestaltungsvielfalt besitzt. Die erfindungsgemäßen Möbelelemente lassen sich zudem einfach handhaben. Außerdem ist es vorteilhaft, dass das erfindungsgemäße Möbelelement beliebig dreidimensional im Raum aufstellbar und optisch ansprechend gestaltet ist, da die durch Verbindungselemente hervorgerufenen optischen Einschränkungen weitestgehend eliminiert sind. Der einfache Aufbau des erfindungsgemäßen Möbelelements erlaubt es, dass die Rahmenelemente modular verwendet werden können. Das erfindungsgemäße Möbel lässt sich flexibel einsetzen und gestalten.

In einem bevorzugten Ausführungsbeispiel besteht das erfindungsgemäße Möbelelement aus einer Anzahl von 2 x a Rahmenelementen des ersten Rahmenelementtyps und aus einer Anzahl von a Rahmenelementen des zweiten Rahmenelementtyps, wobei a eine ganze Zahl größer als 2 ist. Besonders bevorzugt ist die Anzahl a gleich 3 oder gleich 4. Insbesondere die quader- oder würfelförmigen erfindungsgemäßen Möbelelemente (a = 4), lassen sich besonders einfach zu einem erfindungsgemäßen Möbel bestehend aus einer Vielzahl von Möbelelementen zusammensetzen. Das bevorzugte erfindungsgemäße Möbelelement ist ein a-seitiges Prisma.

In einer vorteilhaften Ausführungsform des erfindungsgemäßen Möbelelements wird der Überlappungsabschnitt am ersten Ende und am zweiten Ende des Rahmenelements durch je einen Bereich mit geringerer Höhe verglichen mit dem Körperanschnitt des Rahmenelements gebildet, wobei jeder Überlappungsabschnitt über eine Stufe von dem Körperabschnitt des Rahmenelements getrennt ist und wobei bei einer Anordnung des zweiten Überlappungsabschnitts am zweiten Ende eines Rahmenelements und des ersten Überlappungsabschnitts am ersten Ende eines weiteren Rahmenelements zur Ausbildung der Verbindung übereinander der erste und der zweite Überlappungsabschnitt zusammen eine Gesamthöhe aufweisen, die der Höhe des Körperabschnitts entspricht. Jeder Überlappungsabschnitt liegt hierbei vorzugsweise mit einer seiner Seiten an der Stufe an, welche den Überlappungsabschnitt von dem Körperabschnitt des jeweiligen überlappenden Rahmenelements abgrenzen. Mit anderen Worten lassen sich die stufenartig ausgeklinkten Überlappungsabschnitte an den Enden der Rahmenelemente des ersten Rahmenelementtyps übereinander legen, so dass die beiden Überlappungsabschnitte zusammen eine Gesamthöhe aufweisen, die der Höhe des Körperabschnitts entspricht. Hierdurch ist ein bündiger Anschluss der Rahmenelemente aneinander möglich. Besonders bevorzugt sind die Rahmenelemente des ersten Rahmenelementtyps im Bereich der übereinander liegenden Überlappungsabschnitte fest und bevorzugt lösbar miteinander verbunden. Diese Gestaltung der Rahmenelemente des ersten Rahmenelementtyps ist besonders einfach und führt zur Ausbildung von festen Verbindungen zwischen den Rahmenelementen dieses Rahmenelementtyps.

Ein besonders vorteilhaftes Möbelelement ergibt sich, wenn jedes Rahmenelement des zweiten Rahmenelementtyps an dem benachbarten Rahmenelement des ersten Rahmenelementtyps im Bereich der Überlappungsabschnitte fest und vorzugsweise lösbar verbunden ist. Hierdurch wird ebenfalls eine feste Verbindung der Rahmenelemente des ersten und zweiten Typs erreicht und außerdem eine weder optisch noch mechanisch bei der Verbindung mehrerer Möbelelemente störende Verbindung der Rahmenelemente geschaffen.

Es wird bevorzugt, wenn die Rahmenelemente des ersten Rahmenelementtyps in ihrem (mittleren) Körperabschnitt und die Rahmenelemente des zweiten Rahmenelementtyps jeweils einen L-förmigen Querschnitt aufweisen. Hierdurch lassen sich Platten (Schalen), welche Böden oder Wände ausbilden, einfach an den Rahmenelementen befestigen. Es ist jedoch auch möglich, die Rahmenelemente des ersten und des zweiten Rahmenelementtyps mit beliebigen anderen Querschnitten auszubilden, solange diese ebenfalls eine hohe Stabilität der Möbelelements bei guter Montierbarkeit ermöglichen.

Vorteilhaft ist es außerdem, wenn die Achsen der miteinander verbundenen Rahmenelemente des ersten Rahmenelementtyps und die Achsen der miteinander verbundenen Rahmenelemente des ersten und des zweiten Rahmenelementtyps etwa einen rechten Winkel miteinander ausbilden. Hierdurch definieren die miteinander verbundenen Rahmenelemente jeweils etwa einen rechten Winkel miteinander, um würfel- oder quaderförmige Möbelelemente zu bilden.

Bei einem besonders bevorzugten erfindungsgemäßen Möbelelement ist in und/oder an wenigstens einem der durch die Rahmenelemente gebildeten Rahmen ein ein- oder zweischaliger Wandaufbau als Verkleidungselement an wenigstens einem Verbindungselement vorzugsweise lösbar befestigt vorgesehen. Hierdurch lassen sich die Innen- bzw. Außenseite der Möbelelemente beispielsweise mit unterschiedlichen Farben oder Materialien gestalten oder beliebig austauschen, ohne hierfür den Rahmen oder die Rahmenelemente auseinanderzubauen. Besonders einfach ist es hierbei, wenn die Deck-, Grund- oder Seitenplatte (Wand, Schale) als Verkleidungselement an wenigstens einem Verbindungselement insbesondere mittels einer lösbaren Schnapp- oder Klickverbindung an den Rahmenelementen befestigt ist. Alternativ oder zusätzlich hierzu kann mindestens eine Schubladeneinheit oder dgl. als Funktionselement an wenigstens einem Verbindungselement insbesondere mittels einer lösbaren Schnapp- oder Klickverbindung befestigt sein.

Ein besonders bevorzugtes erfindungsgemäßes Möbel zeichnet sich dadurch aus, dass die Verbindung zweier aneinander grenzender Möbelelemente dadurch erfolgt, dass zwei nebeneinander liegende Rahmenelemente dieser Möbelelemente mittels einer Lasche und/oder eines U-Klemmprofils verbunden sind. Dabei können die Laschen über Schrauben oder dgl. in den Öffnungen der Rahmenelemente festgelegt sein.

Weiter betrifft die Erfindung ein als Außenwandelement gestaltetes Verkleidungs- und/oder Funktionselement zur lösbaren Verbindung mit einem erfindungsgemäßen Möbelelement und/oder Möbel. Hierzu weist das Außenwandelement wenigstens ein auf ein Befestigungselement an dem Rahmen oder einem Verkleidungs- und/oder Funktionselement des Möbelelements abgestimmtes Befestigungselement auf, wobei die Befestigungselemente einen Schnellverschluss, vorzugsweise einen Magnet- und/oder einen Schnapp- oder Klick-Verschluss, bilden. Dies ermöglicht ein rasches Austauschen einzelner Außenwandelemente bspw. zur Veränderung des äußeren Designs des Möbelelements bzw. des Möbels.

Weitere Ziele, Merkmale, Vorteile und Anwendungsmöglichkeiten der Erfindung ergeben sich aus der folgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

### Es zeigen schematisch:

- Fig. 1a bis e: ein Rahmenelement des ersten Rahmenelementtyps für ein erfindungsgemäßes Möbelelement in verschiedenen Ansichten von der Seite und in einem Querschnitt,
- Fig. 2: das Rahmenelement von Figur 1 in einer perspektivischen Ansicht,
- Fig. 3a bis c: ein Rahmenelement eines zweiten Rahmenelementtyps für ein erfindungsgemäßes Möbelelement in Seitenansichten und einer Schnittdarstellung,
- Fig. 4: ein erfindungsgemäßes Möbelelement in einer perspektivischen Ansicht von der Seite mit den Rahmenelementen gemäß den Figuren 1 bis 3,
- Fig. 5: ein Ausschnitt des erfindungsgemäßen Möbelelements (Ansicht einer Eckverbindung) gemäß Figur 4 in einer perspektivischen Ansicht von der Seite,
- Fig. 6a bis e: verschiedene Beispiele von erfindungsgemäßen Möbelelementen je in einer perspektivischen Ansicht von der Seite,
- Fig. 7a, b: das erfindungsgemäße Möbelelement gemäß Figur 4 in einer perspektivischen Ansicht von der Seite mit Boden-platte und eine Schnittdarstellung eines Ausschnitts dieses Möbelelements,
- Fig. 8: das erfindungsgemäße Möbelelement gemäß Figur 4 mit Boden- und Deckenplatte,
- Fig. 9: das Möbelelement gemäß Figur 4 mit Seitenplatten,
- Fig. 10a bis c: verschiedene Querschnitte des erfindungsgemäßen Möbelelements gemäß Figur 9,
- Fig. 11 und 12: weitere Ausführungsbeispiele für die variable Gestaltung des erfindungsgemäßen Möbelelements gemäß Figur 4 je in einer perspektivischen Ansicht von der Seite,
- Fig. 13a bis c: Beispiele für die Verbindung von Rahmenelementen zweier benachbarter Möbelelemente in je einer perspektivischen Ansicht von der Seite,
- Fig. 14 bis 17: verschiedene Ausführungsbeispiele für erfindungsgemäße Möbel in je einer perspektivischen Ansicht von der Seite.

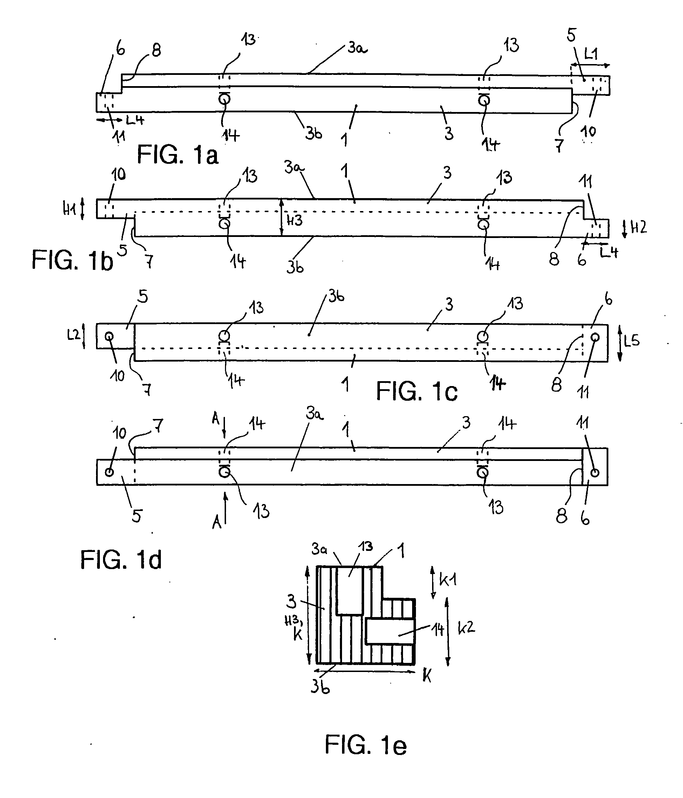

Die Figuren 1a bis 1d zeigen in einer Ansicht von rechts, von links, von unten und in einer Ansicht von oben ein stangenförmiges Rahmenelement 1 eines ersten Rahmenelementtyps. Dieses weist im Bereich eines Körpers 3 (Körperabschnitt) einen L-förmigen Querschnitt mit senkrecht aufeinander und auf der Längsrichtung stehenden Kanten auf. Dies ist besonders deutlich in dem in Figur 1e dargestellten Querschnitt entlang der Richtung A-A zu erkennen. An seinem ersten Ende weist das Rahmenelement 1 einen ersten stufenartig ausgeklinkten Überlappungsabschnitt 5 und an seinem zweiten Ende einen zweiten ebenfalls stufenartig ausgeklinkten Überlappungsabschnitt 6 auf.

Der erste Überlappungsabschnitt 5 ist über eine Stufe 7 von dem Körper 3 des Rahmenelements 1 abgegrenzt. Im Bereich des ersten Überlappungsabschnitts hat das Rahmenelement 1 eine Quaderform mit den Kantenlängen L1 in Richtung der Längsausdehnung des Rahmenelements 1, der Kantenlänge L2 in Richtung der Breite, quer zur Längsausdehnung des Rahmenelements 1 und H1 in Richtung der Höhe des Rahmenelements 1. Die Höhe H1 des Überlappungsabschnitts 5 ist kleiner als die Höhe H3 des Körpers 3 des Rahmenelements 1.

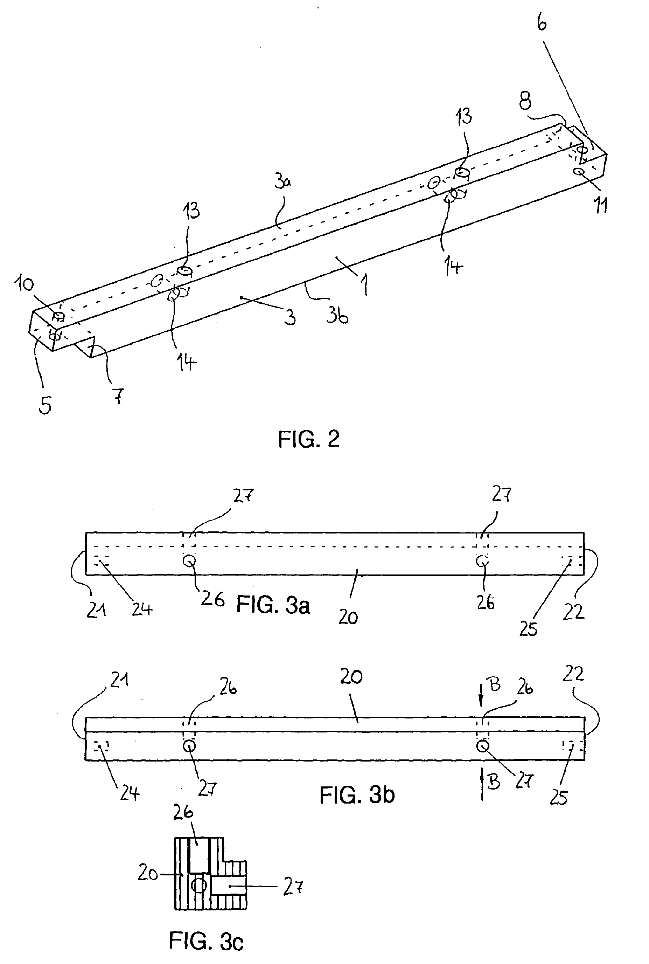

An dem zweiten Ende des Rahmenelements 1 ist der zweite Überlappungsabschnitt 6 angeordnet, der analog zum ersten Überlappungsabschnitt 5 eine Quaderform aufweist. Dieser Abschnitt ist ebenfalls durch eine Stufe 8 vom Körper 3 des Rahmenelements 1 abgegrenzt. Die Stufen 7 und 8 sind an verschiedenen Seiten bezogen auf die Ausdehnung des Rahmenelements in Höhenrichtung angeordnet, das heißt der erste Überlappungsabschnitt 5 verläuft mit der Deckfläche 3a des Körpers 3 bündig und der zweite Überlappungsabschnitt 6 mit der Grundfläche 3b des Körpers 3. Beim Übereinanderlegen des ersten Abschnitts 5 eines ersten Rahmenelements 1 und eines zweiten Überlappungsabschnitts 6 eines weiteren Rahmenelements 1 in einem rechten Winkel zueinander weisen außerdem die jeweils übereinander liegenden, sich an die Stufe 7, 8 jeweils anschließende Fläche des Überlappungsabschnitts 5, 6 die gleiche Größe auf. Hierfür sind die Seitenkanten des zweiten Überlappungsabschnitts 6 derart gestaltet, dass die Kantenlänge L4 des zweiten Überlappungsabschnitts 6 in Längsrichtung der Kantenlänge L2 des ersten Überlappungsabschnitts 5 in Querrichtung entspricht. Entsprechend hat die Kante des zweiten Überlappungsabschnitts 6 in Querrichtung eine Länge L5, die der Kantenlänge L1 des ersten Überlappungsabschnitts 5 in Längsrichtung entspricht. Die Höhe H2 des zweiten Überlappungsabschnitts 6 ergänzt um die Höhe H1 des zweiten Überlappungsabschnitts 5 ergibt die Höhe H3 des Körpers 3 des Rahmenelements 1. Aufgrund der dargestellten Relationen der Kantenlängen der Überlappungsabschnitte 5, 6 legen sich die Stabenden der Rahmenelemente des ersten Rahmenelementtyps lückenlos und verwechslungssicher aneinander und werden über die durchgehenden Bohrungen 10, 11 in den Überlappungsabschnitten 5, 6 mit einem Rahmenelement des zweiten Rahmenelementtyps (siehe Figur 3a bis c) verschraubt. Die Bohrungen 10, 11 verlaufen vorzugsweise im Wesentlichen senkrecht zur Längsrichtung des Rahmenelements 1 in Richtung der Höhe. Aufgrund der bündigen Anordnung der Überlappungsabschnitte 5, 6 zu Deckfläche 3a bzw. Grundfläche 3b wird außerdem ein bündiger Anschluss der Rahmenelemente 1 aneinander erreicht.

Das L-Profil des Körpers 3 weist zwei längste Kanten auf, welche die gleiche Kantenlänge K haben. Vorzugsweise ist die Stufenhöhe K1 der ersten Stufe ein Drittel der Kantenlänge K des Körpers 3. Entsprechend beträgt die verbleibende Stufenhöhe K2 der zweiten Stufe zwei Drittel der Kantenlänge K. Die Kantenlänge K ist außerdem gleich der Kantenlänge L5 des zweiten Überlappungsabschnitts 6 bzw. der Höhe H3 des Körpers 3.

Der Körper 3 des Rahmenelements 1 weist in einem Raster je zwei Bohrungen 13, 14 auf, welche vorzugsweise im Wesentlichen senkrecht zur Längsrichtung des Rahmenelements 1 in Richtung der Höhe bzw. in Querrichtung verlaufen. Die Bohrungen sind vorzugsweise mittig in Bezug auf die halbe Gesamtlänge des ersten Rahmenelements 1 angeordnet. Diese Bohrungen dienen der Aufnahme von handelsüblichen Gewindemuffen, über die bei Bedarf Befestigungsmittel bzw. Verbindungselemente verschraubt werden können. Die Befestigungsmittel dienen unter anderem der Anbringung von Außen- und/oder Innenschalen (Außen- und/oder Innenwände), der Befestigung von Verbindungsstäben sowie der Fixierung von Laschen für die Verbindung zweier erfindungsgemäßer Möbelelemente. In weiteren Ausführungsbeispielen können auch eine beliebige andere Anzahl von Bohrungen vorgesehen sein einschließlich der Möglichkeit, keine Bohrung im Körper 3 vorzusehen.

Anhand der Figuren 3a bis c ist das Rahmenelement 20 eines zweiten Rahmenelementtyps in einer Ansicht von unten und von der Seite sowie in einem Querschnitt entlang der Richtung B-B dargestellt. Das Rahmenelement 20 des zweiten Rahmenelementtyps weist über seine gesamte Länge den gleichen L-förmigen Querschnitt auf, den auch der Körper 3 des Rahmenelements 1 des ersten Rahmenelementtyps ausbildet und ist stangenförmig gestaltet. An seinem ersten Ende 21 und seinem zweiten Ende 22 weist das Rahmenelement 20 je eine in Längsrichtung des Rahmenelements verlaufende Bohrung 24, 25 auf, wobei die Bohrungen 24, 25 zur Verschraubung mit Rahmenelementen 1 des ersten Rahmenelementtyps dienen. Hierfür ist in jede Bohrung eine Gewindemuffe eingelassen. Analog zu dem L-förmigen Körper 3 des Rahmenelements 1 des ersten Rahmenelementtyps kann in dem Rahmenelement 20 des zweiten Rahmenelementtyps Bohrungen 26, 27 eingebracht werden, welche senkrecht zur Längsrichtung des Rahmenelements 20 verlaufen und ebenfalls zur Befestigung von Außen- oder Innenwänden, der Befestigung von Verbindungsstäben oder der Fixierung von Laschen für die Verbindung zweier erfindungsgemäßer Möbelelemente oder dergleichen dienen können. Vorzugsweise sind die Bohrungen mit einem Abstand in Längsrichtung des Rahmenelements 20 von I/2 angeordnet, wobei I die kürzeste Stablänge eines erfindungsgemäßen Möbelelements darstellt.

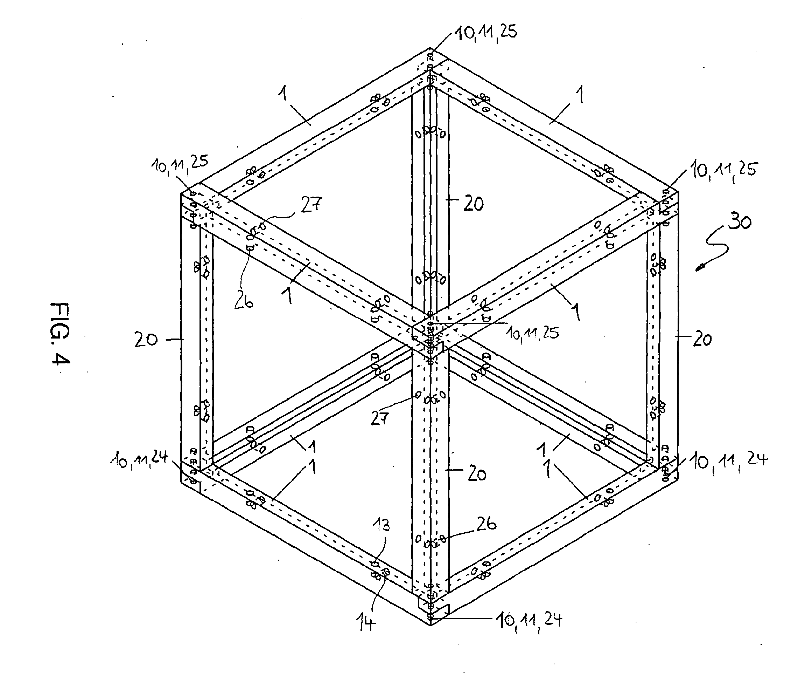

Figur 4 zeigt ein erfindungsgemäßes würfelförmiges Möbelelement 30, welches sich aus vier jeweils im rechten Winkel aneinander gelegten und miteinander verbundenen Rahmenelementen 1 des ersten Rahmenelementtyps in der Grundfläche, vier jeweils im rechten Winkel aneinander gelegten und miteinander verbundenen Rahmenelementen 1 des ersten Rahmenelementtyps in der Deckfläche und senkrecht zu Grund- bzw. Deckfläche verlaufenden Rahmenelementen 20 des zweiten Rahmenelementtyps zusammensetzt.

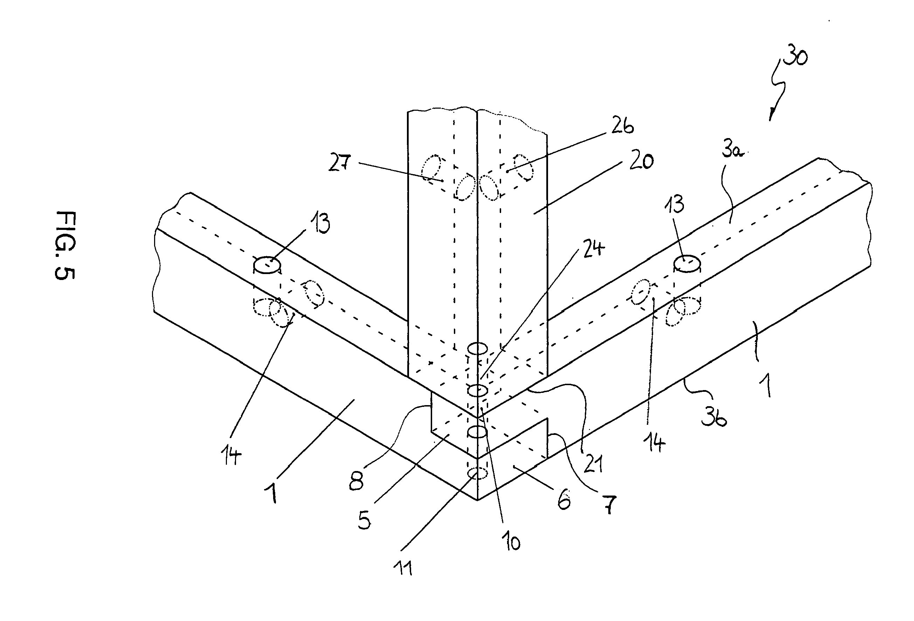

Die Eckverbindung zwischen zwei Rahmenelementen des ersten Rahmenelementtyps 1 und einem Rahmenelement 20 des zweiten Rahmenelementtyps ist in Figur 5 dargestellt. Ein erstes Rahmenelement 1 und ein zweites Rahmenelement 1 sind in der dargestellten Ecke des Würfels jeweils mit ihrem ersten Überlappungsabschnitt 5 bzw. dem zweiten Überlappungsabschnitt 6 im rechten Winkel zueinander überlappend angeordnet. Darüber erstreckt sich senkrecht zu den Längsrichtungen beider Rahmenelemente 1 das Rahmenelement 20 des zweiten Rahmenelementtyps derart, dass die Bohrungen 10, 11 und 24 übereinander liegen, so dass die Rahmenelemente 1, 1 und 20 miteinander verschraubt werden können. Das Rahmenelement 20 steht außerdem so auf den überlappenden Rahmenelementen 1, dass die Kanten senkrecht zur Längsrichtung des Rahmenelements 20 parallel zu den in Längsrichtung verlaufenden Kanten der Rahmenelemente 1 verlaufen. Der Aufbau und die Zusammensetzung der übrigen Ecken des Möbelelements 30 ist analog zu der dargestellten Ecke.

Insgesamt setzt sich das erfindungsgemäße Möbelelement demnach aus acht Rahmenelementen 1 des ersten Rahmenelementtyps, vier Rahmenelementen 20 des zweiten Rahmenelementtyps und acht Verbindungselementen, beispielsweise in der Form von Schrauben, zusammen, welche die Rahmenelemente 1, 1 und 20 miteinander an den Ecken fest und lösbar verbinden.

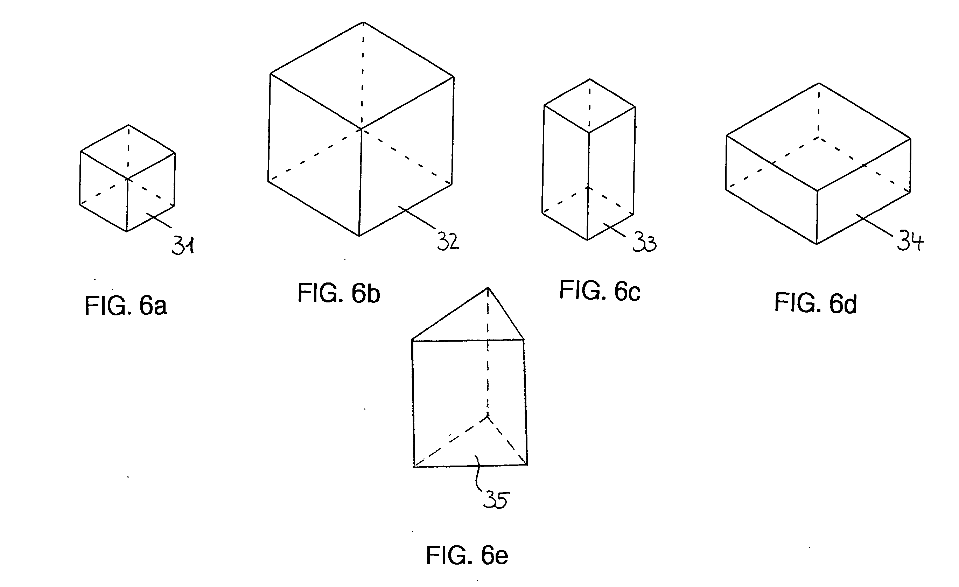

Anhand der Figuren 6a bis e sind schematisch verschiedene erfindungsgemäße Möbelelemente dargestellt. Die Größe und die Form der Möbelelemente kann durch die Länge der Rahmenelemente 1 des ersten Rahmenelementtyps bzw. der Länge der Rahmenelemente 20 des zweiten Rahmenelementtyps oder der Anzahl der verwendeten Rahmenelemente 1 des ersten Rahmenelementtyps für Grund- bzw. Deckfläche und entsprechend der Anzahl der Rahmenelemente 20 des zweiten Rahmenelementtyps beeinflusst werden.

Figur 6a zeigt ein Ausführungsbeispiel eines erfindungsgemäßen Möbelelements in Würfelform, wobei die Länge der Rahmenelemente 1, 20 verglichen mit dem weiteren Ausführungsbeispiel eines erfindungsgemäßen Möbelelements 32 in Figur 6b klein ist. In Figur 6b ist ebenfalls ein würfelförmiges erfindungsgemäßes Möbelelement dargestellt.

Analog zu dem in Figur 4 dargestellten Möbelelement 30 sind die in den Figuren 6a bis 6e gezeigten Möbelelemente aus Rahmenelementen 1, 20 aufgebaut, die entlang der Kanten des jeweiligen Möbelelements verlaufen und in den verschiedenen Ausführungsbeispielen unterschiedliche Längen aufweisen. Quaderförmige Möbelelemente zeigen die Figuren 6c und 6d, wobei der Quader in Figur 6c verglichen mit dem Rahmenelement 1 des ersten Rahmenelementtyps lange Rahmenelemente 20 des zweiten Rahmenelementtyps aufweist, die entlang der vertikalen Kante verlaufen. Die Länge der Rahmenelemente 20 des in Figur 6d dargestellten Quaders ist verglichen mit der Länge der horizontal verlaufenden Rahmenelemente 1 klein.

Anhand von Figur 6e ist ein erfindungsgemäßes Möbelelement dargestellt, welches lediglich drei Rahmenelemente 1 des ersten Rahmenelementtyps in Grund- und Deckfläche aufweist. Hierdurch wird ein 3-seitiges Prisma als Möbelelement 35 hergestellt. Analog kann beispielsweise bei Verwendung von je fünf Rahmenelementen 1 für Grund- bzw. Deckfläche ein 5-seitiges Prisma erhalten werden. Dieses würde fünf Rahmenelemente 20 des zweiten Rahmenelementtyps enthalten. Da die Rahmenelemente bei einem 3- bzw. 5- oder mehrseitigen Prisma in der Regel nicht im rechten Winkel aneinander gelegt werden, werden die Überlappungsabschnitte 5, 6 an den Enden der entsprechenden Rahmenelemente in ihrer Form entsprechend angepasst, so dass bei Aneinanderlegen der Rahmenelemente 1 an den Überlappungsabschnitten 5, 6 ein bündiger und lückenloser Anschluss erreicht wird.

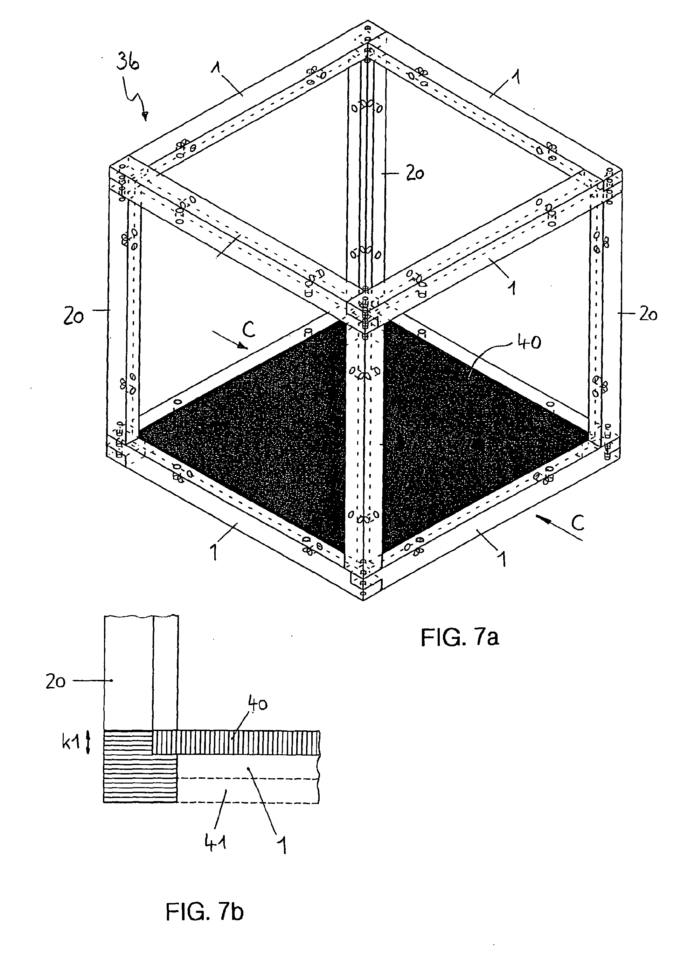

In Figur 7a ist ein erfindungsgemäßes Möbelelement 36 dargestellt, das eine Bodenplatte 40 aufweist. In dem in Figur 7b dargestellten Ausschnitt aus dem Querschnitt entlang der Richtung C-C ist zu erkennen, dass die Bodenplatte 40 auf der zweiten Stufe des Körpers 3 des Rahmenelements 1 aufliegt und die Höhe K1 aufweist. Mittels gestrichelter Linien ist die Anordnung einer weiteren Bodenplatte 41 dargestellt, welche zwischen einander gegenüberliegenden Rahmenelementen 1 im Bereich der zweiten Stufe mit der Stufenhöhe K2 angeordnet werden kann. Eine derartige Anordnung zweier Platten in einem Boden-, Decken- oder Seiten-Segment des Möbelelements wird auch als zweischaliger Aufbau bezeichnet.

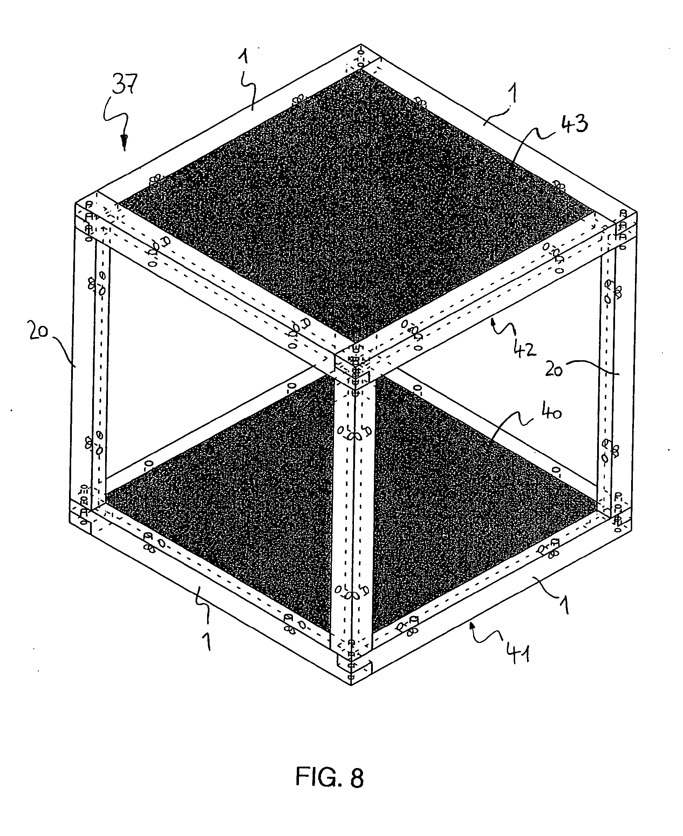

Figur 8 zeigt ein weiteres erfindungsgemäßes Möbelelement 37 mit jeweils zwei Bodenplatten 40, 41 und zwei Deckplatten 42, 43 im Boden- bzw. Deckensegment des Möbelelements 37. Bei einer entsprechenden farblichen Gestaltung der Bodenplatten 40, 41 und der Deckenplatten 42, 43 bzw. einer entsprechenden Materialwahl können interessante optische Effekte im Hinblick auf das Möbelelement 37 erzielt werden. Vorzugsweise beträgt die Höhe einer Bodenplatte 40, 41 bzw. Deckplatte 42, 43 etwa der Kantenlänge K1 der ersten Stufe des Körpers 3 des Rahmenelements 1.

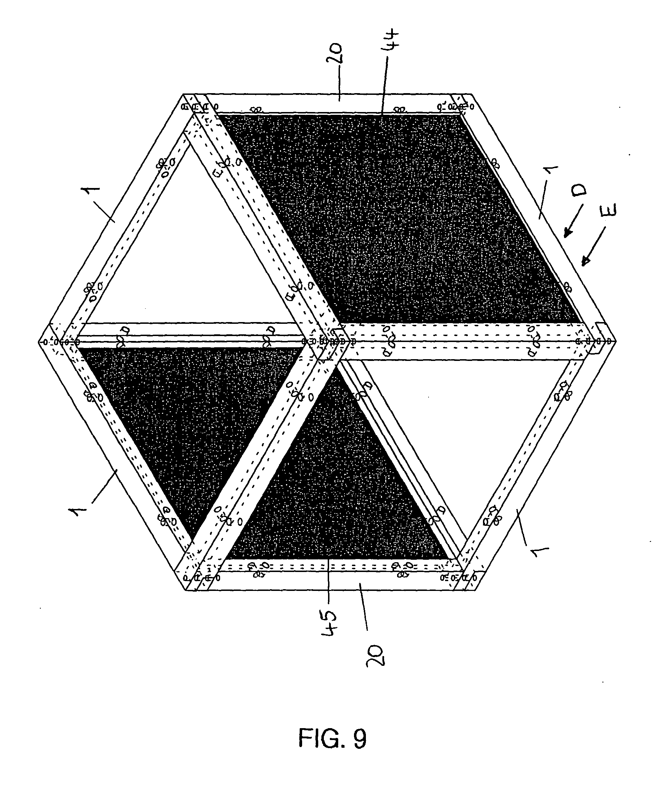

Anhand von Figur 9 ist ein weiteres Ausführungsbeispiel eines erfindungsgemäßen Möbelelements 30 dargestellt, welches mit Seitenplatten 44, 45 versehen ist. Die Seitenplatten 44, 45 sind in jeweils gegenüber liegenden seitlichen Segmenten des Möbelelements 30 angeordnet, so dass jedes dieser Segmente einen einschaligen Aufbau hat.

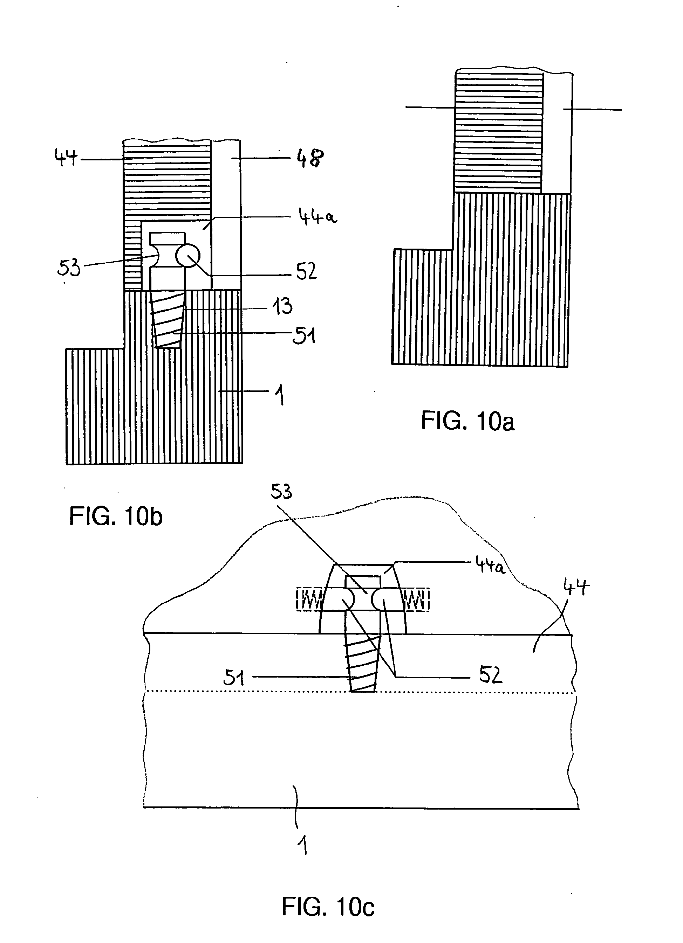

Ein Querschnitt durch eine Seitenwand und das zugehörige Rahmenelement 1 entlang Richtung D ist in einem Ausschnitt anhand von Figur 10a dargestellt. Ein weiterer Ausschnitt entlang der Richtung E zeigt Figur 10b. Im Bereich dieses Querschnitts ist ein Stahlstift 51 oder dgl. Verbindungselement über eine dazugehörige Muffe mit dem Rahmenelement 1 verschraubt. Weiterhin sind zwei federnde, stiftförmige Druckstücke 52 über zugehörige Muffen mit der Wand 44 (Seitenplatte) verschraubt, welche eine Innenwand bildet. Beim Einsetzen der Seitenplatte 44 greifen die einander gegenüber liegend in einer entsprechenden Ausnehmung 44a der Platte 44 angeordneten stiftförmigen Druckstücke 52 in eine entsprechend geformte, umlaufende Nut 53 des Stahlstifts 51 ein und umschließen so den Stahlstift 51. Hierdurch wird die Seitenplatte 44 fest in dem einen Rahmen bildenden Seitensegment bestehend aus zwei Rahmenelementen 1 des ersten Rahmenelementtyps und zwei Rahmenelementen 20 des zweiten Rahmenelementtyps festgehalten. Durch diese Konstruktion kann die Seitenwand von innen in das Möbelelement einfach eingesetzt und durch Druck von außen wieder entnommen werden.

Weiter ist in Figur 10b ein Außenwandelement 48 dargestellt, welches lösbar an der Innenwand 44 fixiert ist. Hierzu weisen das die Innenwand 44 bildende Verkleidungs- und/oder Funktionselement des Möbelelements und das Außenwandelement 48 aufeinander abgestimmte Befestigungselemente (nicht dargestellt) auf, die gemeinsam einen lösbaren Schnellverschluss bilden.

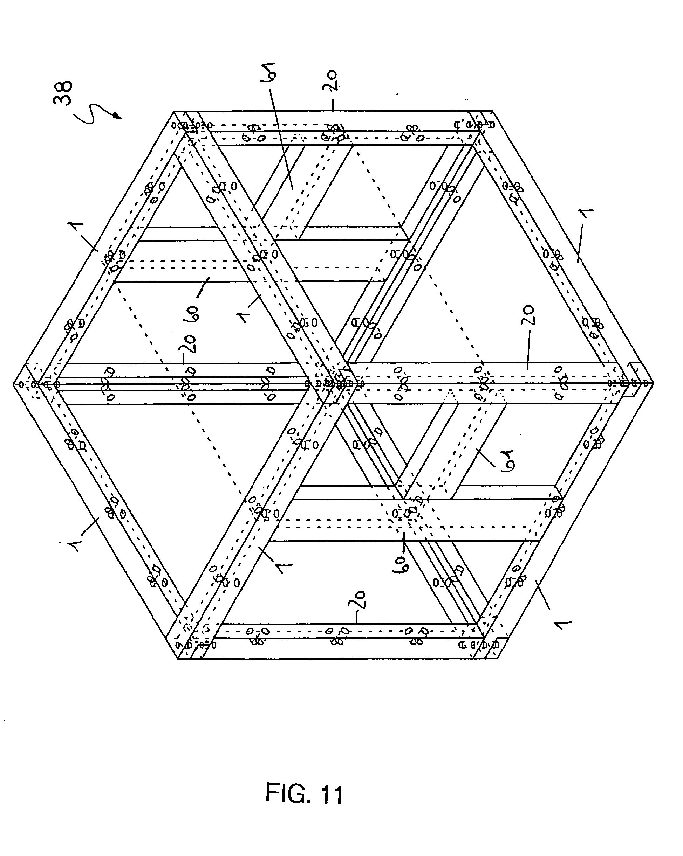

Anhand von Figur 11 ist ein weiteres Ausführungsbeispiel eines erfindungsgemäßen Möbelelements 38 dargestellt. Dieses weist flache Verbindungsstäbe 60, 61 als Verbindungselemente auf, welche zwischen zwei gegenüberliegenden Rahmenelementen 1 des ersten Rahmenelementtyps bzw. zwischen einem Rahmenelement 20 des zweiten Rahmenelementtyps und dem ersten Verbindungsstab 60 angeordnet sind. Zur Befestigung der Verbindungsstäbe 60, 61 dienen vorzugsweise Schrauben, welche in mit Muffen versehenen Bohrungen 13 bzw. 27 eingreifen. Die Verbindungsstäbe 60, 61 sind analog zu den Rahmenelementen 20 des zweiten Rahmenelementtyps an ihren Enden mit Bohrungen versehen, welche in Längsrichtung der Verbindungsstäbe 60, 61 verlaufen. Zur Verbindung werden beispielsweise handelsübliche Exzenter verwendet. Die Breite der Verbindungsstäbe 60, 61 ist vorzugsweise gleich der Kantenlänge K2 der zweiten Stufe des L-Profils des Körpers 3 des Rahmenelements 1. Die Verbindungsstäbe 60, 61 können zur Befestigung von Türen oder zur Aufnahme von Schubladen bzw. Böden dienen.

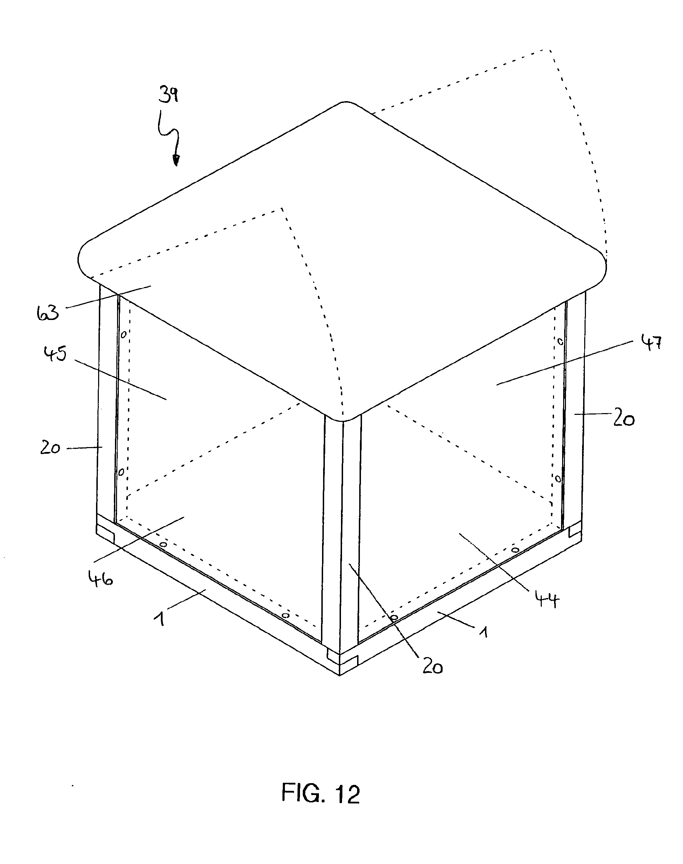

In Figur 12 ist ein weiteres Ausführungsbeispiel eines erfindungsgemäßen Möbelelements 39 dargestellt, welches einen gepolsterten Deckel 63 aufweist. Das erfindungsgemäße Möbelelement 30 weist ferner Seitenplatten 44, 45, 46 und 47 und eine Bodenplatte auf, so dass das Möbelelement 39 eine Truhe bildet, welche mit dem gepolsterten Deckel 63 beispielsweise als Badhocker dienen kann.

Die in Figuren 7 bis 9, 11 und 12 dargestellte Ausführungsbeispiele erfindungsgemäßer Möbelelemente 36, 37, 38 und 39 haben im Hinblick auf die Anordnung und die Länge der Rahmenelemente 1, 20 den gleichen Aufbau wie das in Figur 4 dargestellte Möbelelement 30.

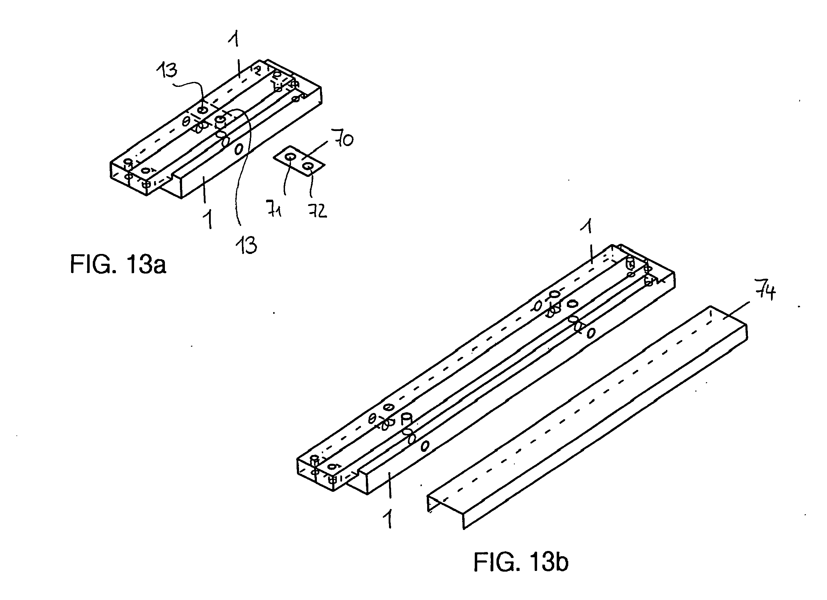

Die erfindungsgemäßen Möbelelemente können aneinander angeordnet werden, so dass mehrere Möbelelemente ein Möbel mit einer neuartigen und sehr variablen Form bildet. Zur Befestigung der Möbelelemente aneinander kann beispielsweise, wie in Figur 13a dargestellt, eine Lasche 70 dienen, welche die Form einer Lochplatte aufweist. Beim Aneinanderlegen zweier Möbelelemente sind zwei Rahmenelemente 1 benachbart angeordnet. Die Lasche 70 mit zwei Bohrungen 71, 72 kann zur Befestigung der benachbarten Möbelelemente aneinander an den entsprechend nebeneinander liegenden Bohrungen 13 am Körper 3 des Rahmenelements 1 befestigt werden.

Eine weitere Möglichkeit für die Befestigung zweier Rahmenelemente 1 aneinander stellt das in Figur 13b dargestellte U-Klemmprofil 74 dar, das die erste Stufe des L-Profils des Körpers 3 bei der Anordnung des U-Klemmprofils 74 an der Oberseite der Rahmenelemente 1 überlappt und so miteinander verbindet. Bei einer entsprechenden farblichen Gestaltung oder einer entsprechenden Materialwahl können derartige U-Klemmprofile gleichzeitig als gestalterische Mittel dienen.

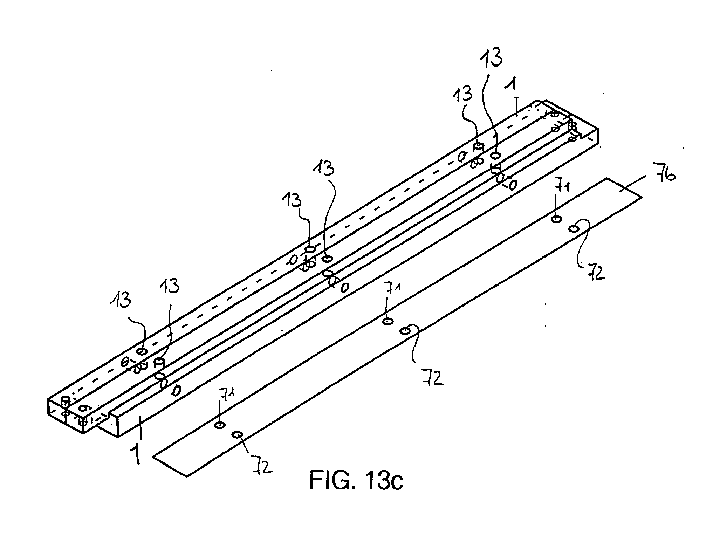

Zur Verbindung von zwei Rahmenelementen 1 verschiedener Möbelelemente eignet sich auch die in Figur 13c dargestellte plattenförmigen Lasche 76, die mittels Bohrungen 71, 72 analog zu Lasche 70 aus Figur 3a mit den Bohrungen 13 der darunter liegenden Rahmenelemente 1 verbunden werden kann. Analog zu dem in Figur 13b dargestellten U-Klemmprofil 74 kann bei entsprechender Materialwahl und/oder Farbgebung die Lasche 76 ebenfalls als gestalterisches Mittel verwendet werden.

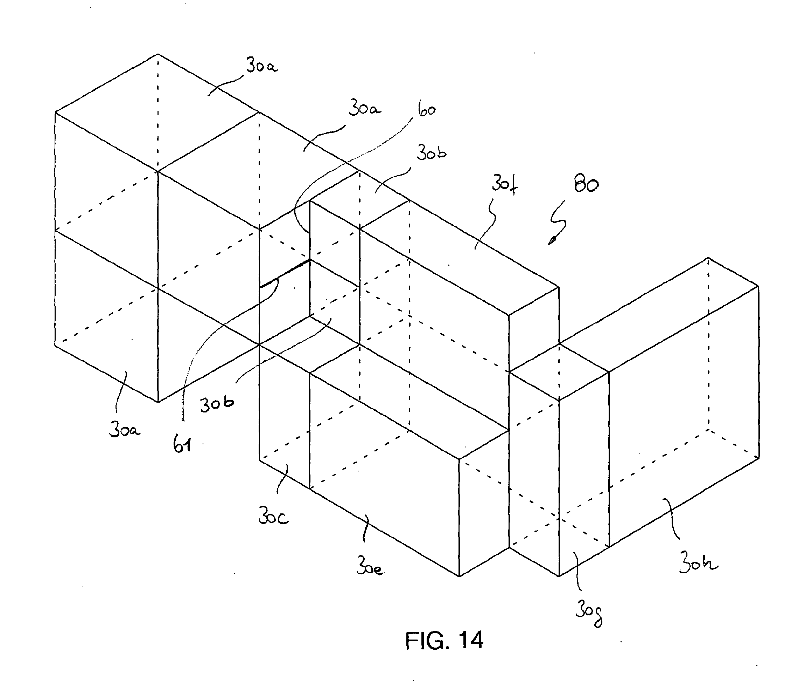

Anhand der Figuren 14 bis 17 werden verschiedene Beispiele für erfindungsgemäße Möbel dargestellt, welche sich aus einer Vielzahl von Möbelelementen zusammensetzen, die gleiche oder unterschiedliche Formen beispielsweise entsprechend der Figuren 6a bis 6e aufweisen.

Figur 14 stellt exemplarisch eine Raumkonstruktion (Möbel 80) bestehend aus unterschiedlichen und miteinander verbundenen quaderförmigen Möbelelementen 30a bis 30h dar. Anhand diesem Beispiel wird besonders deutlich, dass durch die Kombination von Quadern mit unterschiedlichen Abmessungen eine große Flexibilität beim Aufbau eines Möbels erzielt werden kann. Für den Übergang zwischen den verschieden großen Möbelelementen oder aus optischen Gründen können an einigen Möbelelementen Verbindungsstäbe 60, 61 angebracht sein. Über die Verbindungsstäbe 60, 61 kann die Zahl der für eine Verbindung zwischen zwei unterschiedlich großen oder versetzt angeordneten Möbelelementen zur Verfügung stehenden Flächen maximiert werden. Der Verbindungsstab 61 dient lediglich der optischen Abgrenzung.

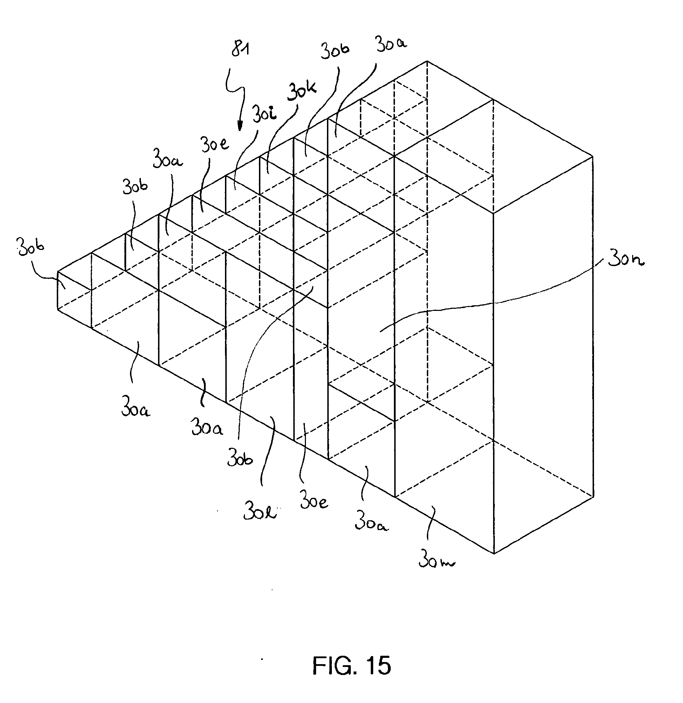

Figur 15 zeigt die Kombination (Möbel 81) von erfindungsgemäßen Möbelelementen 30a, 30b, 30e und 30i bis 30n, die eine insgesamt treppenartige Form ausbilden. Diese Form eignet sich hervorragend für die Anpassung an Dachschrägen.

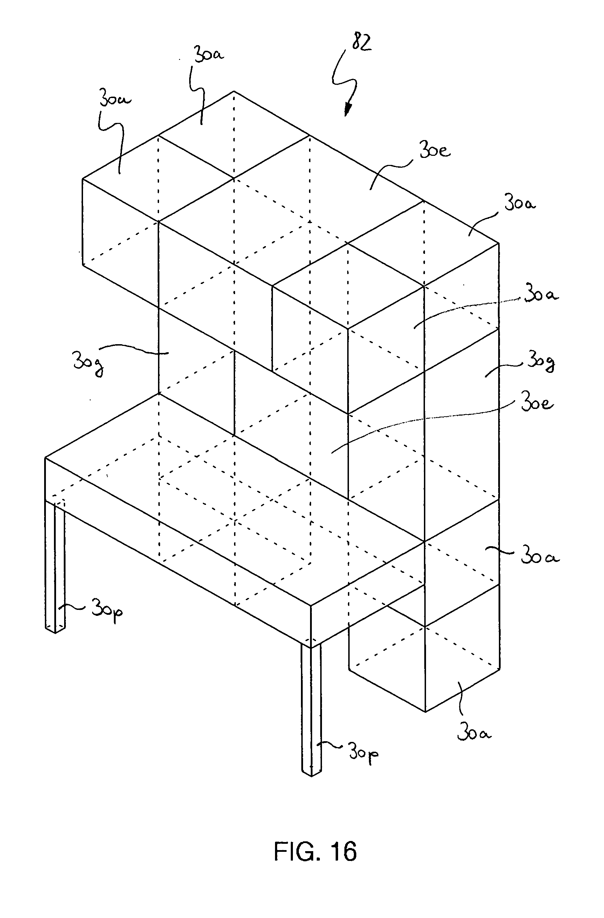

Anhand von Figur 16 ist ein weiteres Ausführungsbeispiel für ein erfindungsgemäßes Möbel 82 in Form eines Schreibtisches dargestellt, das aus einer Kombination unterschiedlicher erfindungsgemäßer Möbelelemente 30a, 30e, 30g und 30p in dreidimensionaler Ausrichtung besteht.

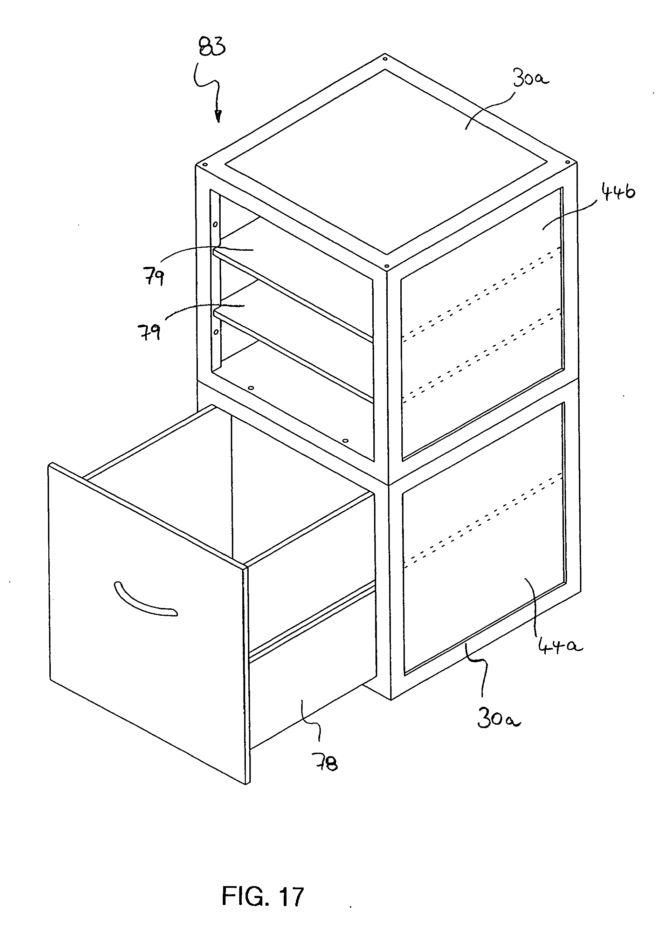

Schließlich wird in Figur 17 die Kombination (Möbel 83) zweier erfindungsgemäßer Möbelelemente 30a der gleichen äußeren Form bezogen auf die Rahmenelemente gezeigt. Die Innenwände 44a und 46a des unteren Möbelelements sind mit den notwendigen und handelsüblichen Befestigungsmitteln zur Aufnahme einer Schublade 78 versehen. Das obere Möbelelement wurde mit Innenwänden 44b, 46b versehen, welche das Einlegen von Regalböden 79 ermöglichen.

Die Rahmenelemente 1, 20 und die übrigen Teile der erfindungsgemäßen Möbelelemente und Möbel können beispielsweise aus Holz, Pappe, Kunststoff, aus metallischem Material oder entsprechenden Materialgemischen bestehen.

Insbesondere die verschiedenen Ausführungsbeispiele für erfindungsgemäße Möbel, dargestellt in den Figuren 14 bis 17 zeigen, wie variabel einsetzbar die erfindungsgemäßen Möbelelemente sind und welche vielfältigen Möbel durch diese gestaltet werden können.

### Bezugszeichenliste:

- 1: Rahmenelement eines ersten Rahmenelementtyps
- 3: Körper des Rahmenelements 1
- 3a: Deckfläche des Körpers 3
- 3b: Grundfläche des Körpers 3
- 5: erster Überlappungsabschnitt (Ausklinkung) des Rahmenelements 1
- 6: zweiter Überlappungsabschnitt (Ausklinkung) des Rahmenelements 1
- 7,8: Stufe
- 10: Bohrung im ersten Überlappungsabschnitt 5
- 11: Bohrung im zweiten Überlappungsabschnitt 6
- 13,14: Bohrung im Körper 3 des Rahmenelements 1
- 20: Rahmenelement eines zweiten Rahmenelementtyps
- 21: erstes Ende des Rahmenelements 20
- 22: zweites Ende des Rahmenelements 20
- 24,25: Bohrung in Längsrichtung des Rahmenelements 20
- 26,27: Bohrung in Querrichtung des Rahmenelements 20
- 30a - 30p: Möbelelement
- 31 - 39: Möbelelement
- 40,41: Bodenplatte
- 42,43: Deckplatte
- 44,44b: Seitenplatte (Innenwand)
- 44a: Ausnehmung in Seitenplatte 44
- 45 - 47: Seitenplatte
- 48: Außenwandelement
- 51: Stahlstift
- 52: stiftförmiges Druckstück
- 53: umlaufende Nut im Stahlstift 51
- 60,61: Verbindungsstab
- 63: gepolsterter Deckel
- 70: Lasche
- 71,72: Bohrung der Lasche 70
- 74: U-Klemmprofil
- 76: Lasche
- 78: Schublade
- 79: Boden
- 80: Möbel
- L1: Kantenlänge des ersten Überlappungsabschnitts 5 in Längsrichtung

- L2: Kantenlänge des ersten Überlappungsabschnitts 5 in Querrichtung
- L4: Kantenlänge des zweiten Überlappungsabschnitts 6 in Längsrichtung
- L5: Kantenlänge des zweiten Überlappungsabschnitts 6 in Querrichtung
- H1: Höhe des ersten Überlappungsabschnitts 5
- H2: Höhe des zweiten Überlappungsabschnitts 6
- H3: Höhe des Körpers 3
- K: Kantenlänge in Querrichtung des Körpers 3
- K1: Kantenlänge der ersten Stufe des L-Profils des Körpers 3 in Richtung der Höhe
- K2: Kantenlänge der zweiten Stufe des L-Profils des Körpers 3 in Richtung der Höhe

## Patentansprüche

1. Möbelelement mit einem insbesondere quaderförmigen Rahmen aus im Wesentlichen stangenförmigen Rahmenelementen und mit wenigstens einem Verkleidungs- und/oder Funktionselement, welches mit dem Rahmen verbindbar ist, **dadurch gekennzeichnet, dass** die Rahmenelemente (1, 20) des Rahmens in einem definierten Raster jeweils wenigstens eine erste und wenigstens eine zweite Öffnung (13, 14, 26, 27) aufweisen, wobei jeweils eine erste und eine zweite Öffnung einander derart zugeordnet sind, dass sie in Längsrichtung des jeweiligen Rahmenelements positionsgleich angeordnet aber zueinander in einem vorgegebenen Winkel, insbesondere rechtwinklig, ausgerichtet sind, und dass zur lösbaren Befestigung eines Verkleidungs- und/oder Funktionselements (40, 41, 42, 43, 44, 45, 46, 47, 48, 60, 61, 63, 74, 78, 79) entweder wenigstens ein Verbindungselement in zwei einander zugewandten Öffnungen oder wenigstens zwei Verbindungselemente in zwei einander zugewandten Öffnungen festgelegt ist, wobei diese Öffnungen in zwei einander gegenüberliegenden Rahmenelementen angeordnet sind.

2. Möbelelement nach Anspruch 1, **dadurch gekennzeichnet, dass** wenigstens ein mit dem Rahmen verbindbares Verkleidungs- und/oder Funktionselement (44) als eine vorzugsweise von dem Rahmen lösbare Innenwand ausgebildet ist, die wenigstens ein zusätzliches Befestigungselement zum vorzugsweise lösbaren Fixieren von wenigstens einem Außenwandelement (48) aufweist.

3. Möbelelement nach Anspruch 1 oder 2, **dadurch gekennzeichnet, dass** die Öffnungen jeweils als Sacklochbohrungen (13, 14, 26, 27) ausgebildet sind, in welchen Gewindemuffen zum Anschluss eines Verbindungselements aufgenommen sind.

4. Möbelelement nach einem der Ansprüche 1 bis 3, **dadurch gekennzeichnet, dass** die Rahmenelemente (1, 20) derart in dem Rahmen angeordnet sind, dass jeweils zwei zumindest im Wesentlichen baugleiche Rahmenelemente parallel zueinander verlaufend einander gegenüberliegen, wobei diese Rahmenelemente zueinander um 180° um eine Achse senkrecht zu der Längsachse der Rahmenelemente gedreht sind.

5. Möbelelement nach einem der Ansprüche 1 bis 4, **dadurch gekennzeichnet, dass** das Raster der Öffnungen (13, 14, 26, 27) derart gewählt ist, dass Öffnung in zwei zumindest im Wesentlichen baugleichen und parallel zueinander verlaufend einander gegenüberliegen Rahmenelementen (1, 20) zum Anschluss eines Verbindungselements miteinander fluchten.

6. Möbelelement, insbesondere nach einem der Ansprüche 1 bis 5, mit einer Vielzahl von im Wesentlichen stangenförmigen Rahmenelementen, die die Form entweder eines ersten Rahmenelementtyps (1) oder eines zweiten Rahmenelementtyps (20) oder ggf. eines weiteren Rahmenelementtyps aufweisen, wobei der erste Rahmenelementtyp an seinem ersten Ende und seinem zweiten Ende je einen insbesondere stufenartig ausgeklinkten Überlappungsabschnitt (5, 6) aufweisen, wobei in Ecken des Möbelelements jeweils zwei Rahmenelemente (1) des ersten Rahmenelementtyps miteinander und ggf. mit einem Rahmenelement (20) des zweiten Rahmenelementtyps verbunden sind, wobei die Verbindung der Rahmenelemente des ersten Rahmenelementtyps derart erfolgt, dass sich der ausgeklinkte Überlappungsabschnitt (5) des ersten Endes eines der Rahmenelemente des ersten Rahmenelementtyps mit dem ausgeklinkten Überlappungsabschnitt (6) des zweiten Endes des anderen Rahmenelements des ersten Rahmenelementtyps überlappen.

7. Möbelelement nach Anspruch 6, **dadurch gekennzeichnet, dass** eine Anzahl von 2 x a Rahmenelementen (1) des ersten Rahmenelementtyps und eine Anzahl von a Rahmenelementen (20) des zweiten Rahmenelementtyps vorgesehen sind, wobei a eine ganze Zahl größer als 2 ist.

8. Möbelelement nach Anspruch 7, **dadurch gekennzeichnet, dass** die Anzahl a gleich 3 oder gleich 4 ist.

9. Möbelelement nach einem der Ansprüche 6 bis 8, **dadurch gekennzeichnet, dass** die stufenartig ausgeklinkten Überlappungsabschnitte (5, 6) am ersten Ende und am zweiten Ende der Rahmenelemente (1) des ersten Rahmenelementtyps durch je einen Bereich mit geringerer Höhe verglichen mit dem mittleren Körperabschnitt des Rahmenelements (1) gebildet werden, wobei die Höhe (H1, H2) und Form des ersten bzw. zweiten Überlappungsabschnitts der Höhe (H2, H1) und Form der zweiten bzw. ersten Ausklinkung entspricht, so dass bei einer Anordnung des zweiten Überlappungsabschnitts (6) und des ersten Überlappungsabschnitts (5) übereinander die beiden Überlappungsabschnitte zusammen eine Gesamthöhe (H3) aufweisen, die der Höhe des Körperabschnitts (3) entspricht.

10. Möbelelement nach Anspruch 9, **dadurch gekennzeichnet, dass** jeder Überlappungsabschnitt (5, 6) mit einer seiner Seiten an einer durch die Ausklinkung gebildeten Stufe (7, 8) anliegt, welche den Überlappungsabschnitt von dem Körperabschnitt (3) des jeweiligen Rahmenelements abgrenzen.

11. Möbelelement nach einem der Ansprüche 6 bis 10, **dadurch gekennzeichnet, dass** die Rahmenelemente (1) des ersten Rahmenelementtyps im Bereich der übereinander liegenden Überlappungsabschnitte fest und vorzugsweise lösbar miteinander verbunden sind.

12. Möbelelement nach Anspruch 11, **dadurch gekennzeichnet, dass** jedes Rahmenelement (20) des zweiten Rahmenelementtyps stirnseitig an den jeweils benachbarten Rahmenelementen (1) des ersten Rahmenelementtyps im Bereich deren Überlappungsabschnitte fest und vorzugsweise lösbar verbunden ist.

13. Möbelelement nach einem der Ansprüche 11 oder 12, **dadurch gekennzeichnet, dass** in jeder Ecke wenigstens eine Schraube oder dgl. vorgesehen ist, welche die beiden aufeinander liegenden Überlappungsbereiche (5, 6) der Rahmenelemente (1) des ersten Rahmenelementtyps durchdringt und mit der Stirnseite eines Rahmenelements (20) des zweiten Rahmenelementtyps verbindet.

14. Möbelelement nach einem der Ansprüche 6 bis 13, **dadurch gekennzeichnet, dass** die Rahmenelemente (1) des ersten Rahmenelementtyps in ihrem Körperabschnitt (3) und die Rahmenelemente (20) des zweiten Rahmenelementtyps jeweils einen L-förmigen Querschnitt aufweisen.

15. Möbelelement nach einem der vorhergehenden Ansprüche, **dadurch gekennzeichnet, dass** die miteinander verbundenen Rahmenelemente (1, 20) jeweils etwa einen rechten Winkel miteinander ausbilden.

16. Möbelelement nach einem der vorhergehenden Ansprüche, **dadurch gekennzeichnet, dass** in und/oder an wenigstens einem der durch die Rahmenelemente (1, 20) gebildeten Rahmen ein ein- oder zweischaliger Wandaufbau (40, 41, 42, 43, 44, 45, 46, 47, 48) als Verkleidungselement an wenigstens einem Verbindungselement vorzugsweise lösbar befestigt vorgesehen ist.

17. Möbelelement nach einem der vorhergehenden Ansprüche, **dadurch gekennzeichnet, dass** mindestens eine Decken-, Grund- oder Seitenplatte (40, 41, 42, 43, 44, 45, 46, 47, 48) als Verkleidungselement an wenigstens einem Verbindungselement insbesondere mittels einer lösbaren Schnapp- oder Klickverbindung befestigt ist.

18. Möbelelement nach einem der vorhergehenden Ansprüche, **dadurch gekennzeichnet, dass** mindestens eine Schubladeneinheit (78) als Funktionselement an wenigstens einem Verbindungselement insbesondere mittels einer lösbaren Schnapp- oder Klickverbindung befestigt ist.

19. Möbel bestehend aus einem oder mehreren miteinander verbundenen Möbelelementen nach einem der vorhergehenden Ansprüche.

20. Möbel nach Anspruch 19, **dadurch gekennzeichnet, dass** die Verbindung zweier Möbelelemente **dadurch** erfolgt, dass zwei Rahmenelemente (1, 20) zweier aneinander angrenzender Möbelelemente mittels einer Lasche (70) und/oder eines U-Klemmprofils (74) verbunden sind.

21. Möbel nach Anspruch 20, **dadurch gekennzeichnet, dass** die Laschen (70) über Schrauben oder dgl. in den Öffnungen der Rahmenelemente (1, 20) festgelegt sind.

22. Außenwandelement welches zur lösbaren Verbindung mit einem Möbelelement nach Anspruch 2 oder 6 wenigstens ein auf ein Befestigungselement an dem Rahmen oder einem Verkleidungs- und/oder Funktionselement des Möbelelements abgestimmtes Befestigungselement aufweist, wobei die Befestigungselemente vorzugsweise einen Magnet- und/oder einen Schnapp- oder Klick-Verschluss bilden.
